# EUROPEAN PATENT APPLICATION

(11) **EP 4 693 632 A1**
(43) Date of publication of application: **11.02.2026**
(21) Application number: 24784774.2
(22) Date of filing: 25.03.2024
(51) Int. Cl.: H01M 50/105, H01G 2/10, H01G 9/08, H01G 11/80, H01M 10/0562, H01M 50/121, H01M 50/129, H01M 50/133, H01M 50/134

(54) **POWER STORAGE DEVICE EXTERNAL PACKAGING MATERIAL**

(30) Priority: 04.04.2023 JP 2023060921
(71) Applicant: Toppan Holdings Inc., Tokyo 110-0016 (JP)
(72) Inventor: IMAMOTO, Junya, Tokyo 110-0016 (JP); MURAKI, Takuya, Tokyo 110-0016 (JP)
(74) Representative: Hoffmann Eitle
(86) International application number: PCT/JP2024/011762
(87) International publication number: WO 2024/209984

(57) **Abstract**

A power storage device packaging material including a substrate layer, a barrier layer, a thermal adhesive resin layer or an adhesive layer, and a sealant layer that are laminated in this order, wherein in a case where (I) represents the sealant layer or the thermal adhesive resin layer and the sealant layer and (II) represents the substrate layer, a loop stiffness value of (I) is 10 mN or more and 80 mN or less, a loop stiffness value of (II) is 2 mN or more and 20 mN or less, a ratio (I/II) between the loop stiffness value of (I) and the loop stiffness value of (II) is 1.0 or more and 15 or less, and a ratio (I/II) between a thickness of (I) and a thickness of (II) is 1.0 or more and 8.0 or less.

## Description

### [Technical Field]

The present disclosure relates to a power storage device packaging material.

### [Background Art]

Known examples of power storage devices include secondary batteries such as lithium-ion batteries, nickel-metal hydride batteries, and lead batteries, and electrochemical capacitors such as electric double layer capacitors. As mobile devices have been downsized or installation space for power storage devices has become limited, there have been demands for further downsized power storage devices. Accordingly, lithium-ion batteries having high energy density are attracting attention. Conventional packaging materials for lithium-ion batteries have been metal cans; however, multilayer films are increasingly used due to their light weight, high heat dissipation, and low production cost.

Lithium-ion batteries including such a multilayer film as a packaging material are referred to as laminated lithium-ion batteries. A laminated lithium-ion battery includes a power storage element that includes a positive electrode, a liquid electrolyte, and a negative electrode, and a packaging bag that houses the power storage element, thus preventing moisture from entering inside. The packaging bag includes a packaging material, and the packaging material includes a substrate layer, a barrier layer, an adhesive layer, and a sealant layer in this order. The packaging material covers the power storage element so that the sealant layer faces inside and the substrate layer faces outside. A laminated lithium-ion battery is produced, for example, by forming a recess in a portion of a packaging material by cold forming, placing a power storage element in the recess, folding the remaining part of the packaging material, and heat sealing the edge portion (see, for example, PTL 1).

### [Citation List]

### [Patent Literature]

[PTL 1] JP 2013-101765 A

### [Summary of the Invention]

### [Technical Problem]

For example, power storage devices referred to as all-solid-state batteries are under research and development as next-generation batteries replacing lithium-ion batteries. An all-solid-state battery includes, for example, a power storage element, and a packaging bag that houses the power storage element. In the all-solid-state battery, expansion or shrinkage of a negative electrode and a positive electrode due to charging and discharging may cause peeling between a solid electrolyte and a positive active material or between the solid electrolyte and a negative active material. This may lead to insufficient output of the all-solid-state battery. Thus, in order to achieve higher output of the all-solid-state battery, unlike in a liquid lithium-ion battery, pressure may be applied to the power storage element via the packaging bag. However, the application of pressure may cause excessive deformation of the packaging bag, leading to failure of uniform application of pressure to the power storage element via the packaging bag.

The possible temperature range of all-solid-state batteries is, for example, -40°C or higher and 100°C or lower. This range is larger than the possible temperature range of liquid lithium-ion batteries (e.g., -40°C or higher and 60°C or lower). In an all-solid-state battery in which pressure is applied by a packaging bag under high temperature environmental conditions (e.g., 70°C or higher) in order to achieve higher output of the all-solid-state battery, deformation of the packaging bag described above is more likely to occur. Thus, the output of the all-solid-state battery may be insufficient when the all-solid-state battery is used under high temperature environmental conditions.

An object of an aspect of the present disclosure is to provide a power storage device packaging material that is less likely to be excessively deformed when pressure is applied under high temperature environmental conditions.

### [Solution to Problem]

A power storage device packaging material according to an aspect of the present disclosure is a power storage device packaging material including a substrate layer, a barrier layer, a thermal adhesive resin layer or an adhesive layer, and a sealant layer that are laminated in this order, in which in a case where (I) represents the sealant layer or the thermal adhesive resin layer and the sealant layer and (II) represents the substrate layer, a loop stiffness value of the layer or layers (I) is 10 mN or more and 80 mN or less, a loop stiffness value of the layer (II) is 2 mN or more and 20 mN or less, a ratio (I/II) between the loop stiffness value of the layer or layers (I) and the loop stiffness value of the layer (II) is 1.0 or more and 15 or less, and a ratio (I/II) between a thickness of the layer or layers (I) and a thickness of the layer (II) is 1.0 or more and 8.0 or less.

In the power storage device packaging material, the ratio (I/II) between the loop stiffness value of the layer or layers (I) and the loop stiffness value of the layer (II) is 1.0 or more and 15 or less, and the ratio (I/II) between the thickness of the layer or layers (I) and the thickness of the layer (II) is 1.0 or more and 8.0 or less. By satisfying these parameters, it is possible to provide a power storage device packaging material that is less likely to be excessively deformed when pressure is applied under high temperature environmental conditions.

The thickness of the layer or layers (I) may be 30 µm or more and 120 µm or less, and the thickness of the layer (II) may be 10 µm or more and 60 µm or less. In that case, it is possible to ensure the durability of the packaging material while preventing the packaging material from having an excessive thickness. In addition, each of the loop stiffness value of the layer or layers (I) and the loop stiffness value of the layer (II) can be securely set in the above range.

The ratio (I/II) between the loop stiffness value of the layer or layers (I) and the loop stiffness value of the layer (II) may be 2.5 or more and 11.0 or less. In that case, deformation of the power storage device packaging material is better prevented when pressure is applied under high temperature environmental conditions.

The ratio (I/II) between the loop stiffness value of the layer or layers (I) and the loop stiffness value of the layer (II) may be 3.5 or more and 10 or less. Alternatively, the ratio (I/II) between the loop stiffness value of the layer or layers (I) and the loop stiffness value of the layer (II) may be 8.0 or more and 9.0 or less. In those cases, deformation of the power storage device packaging material is more successfully prevented when pressure is applied under high temperature environmental conditions.

The sealant layer may contain a polypropylene resin that is a base resin, and the polypropylene resin may be composed of homopropylene or block polypropylene. In that case, it is possible to prevent the sealant layer from being melted under high temperature environmental conditions.

The sealant layer may further contain an additive resin containing a polyethylene resin, or a block copolymer compatible with the polypropylene resin. In that case, deformation of the power storage device packaging material is more effectively prevented. A content of the additive resin or the block copolymer in the sealant layer may be 10 mass% or more and 20 mass% or less. In that case, deformation of the power storage device packaging material is more effectively prevented.

The sealant layer may further contain an additive resin containing a polyethylene resin, and a compatibilizer having a portion compatible with the polypropylene resin and a portion compatible with the polyethylene resin. In that case, deformation of the power storage device packaging material is effectively prevented. A total content of the additive resin and the compatibilizer in the sealant layer may be 10 mass% or more and 20 mass% or less. In that case, deformation of the power storage device packaging material is more effectively prevented.

The compatibilizer may contain a block copolymer of polypropylene and polyethylene, or a block copolymer of polyethylene and polyethylene butylene.

The power storage device packaging material may be an all-solid-state battery packaging material. The power storage device packaging material can be prevented from being deformed when pressure is applied under high temperature environmental conditions, and thus has high suitability as a packaging material for an all-solid-state battery.

### [Advantageous Effects of the Invention]

The present disclosure provides a power storage device packaging material that is less likely to be excessively deformed when pressure is applied under high temperature environmental conditions.

### [Brief Description of the Drawings]

Fig. 1 is a schematic cross-sectional view of a power storage device packaging material according to an embodiment.
Fig. 2 is a perspective view of a power storage device according to the embodiment.
Fig. 3 (a) is a schematic cross-sectional view of a packaging material as a comparative example pressed against a rigid body, and Fig. 3 (b) is a schematic cross-sectional view of the power storage device packaging material according to the embodiment pressed against a rigid body.
Fig. 4 is a schematic cross-sectional view of a power storage device packaging material according to a modification.

### [Description of the Embodiments]

Preferred embodiments of the present disclosure will be described in detail below with reference to the drawings as appropriate. In the drawings, the same or corresponding components are denoted by the same reference signs, and redundant description is omitted. Furthermore, dimensional ratios in the drawings are not limited to the ratios shown in the drawings.

### [Power storage device packaging material]

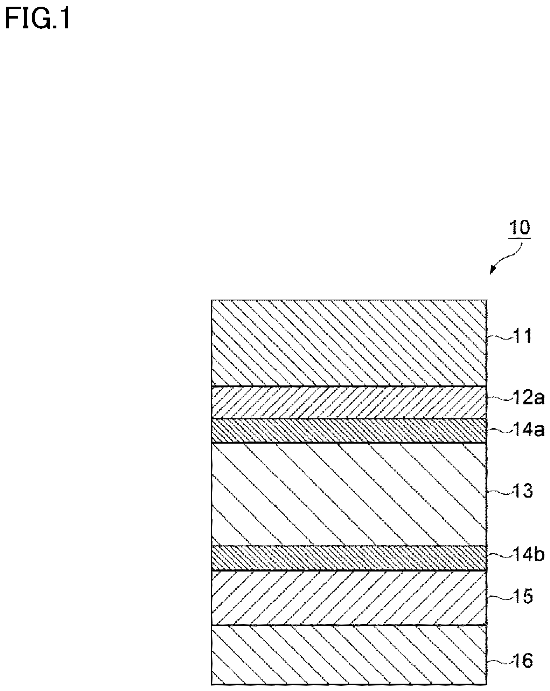

Fig. 1 is a schematic cross-sectional view of a power storage device packaging material according to an embodiment. As shown in Fig. 1, a packaging material 10 (power storage device packaging material) according to the embodiment is a packaging material used for a power storage device, and includes a substrate layer 11, a barrier layer 13, a thermal adhesive resin layer 15, and a sealant layer 16 that are laminated in this order. In the case where (I) represents a laminate of the thermal adhesive resin layer 15 and the sealant layer 16 and (II) represents the substrate layer 11, the loop stiffness value of the laminate (I) is 10 mN or more and 80 mN or less, the loop stiffness value of the layer (II) is 2 mN or more and 20 mN or less, the ratio (I/II) between the loop stiffness value of the laminate (I) and the loop stiffness value of the layer (II) is 1.0 or more and 15 or less, and the ratio (I/II) between the thickness of the laminate (I) and the thickness of the layer (II) is 1.0 or more and 8.0 or less. The packaging material 10 can be prevented from being deformed when pressure is applied under high temperature environmental conditions.

In the embodiment, in the packaging material 10, the barrier layer 13 includes a first anticorrosion treatment layer 14a via a first adhesive layer 12a on the substrate layer 11 side, and a second anticorrosion treatment layer 14b on the sealant layer 16 side. When the packaging material 10 is used as a packaging bag for a power storage device, in the packaging material 10, the substrate layer 11 is the outermost layer, and the sealant layer 16 is the innermost layer. That is, the packaging material 10 is used so that the substrate layer 11 faces the outside of the power storage device and the sealant layer 16 faces the inside of the power storage device.

The layers constituting the packaging material 10 will be specifically described.

### <Substrate layer>

The substrate layer 11 allows the packaging material for a power storage device to have heat resistance in a sealing process during production of the power storage device, and prevents the possible occurrence of pinholes during forming processing, distribution, and the like. In the case of the packaging material for a large power storage device in particular, the substrate layer 11 can also allow the packaging material to have scratch resistance, chemical resistance, insulating properties, and the like.

The substrate layer 11 may be, for example, composed of a resin having insulating properties. Examples of the resin include a polyester resin, a polyamide resin, a polyimide resin, a polyamideimide resin, a polyether ketone resin, a polyphenylene sulfide resin, a polyetherimide resin, a polysulfone resin, a fluororesin, a phenol resin, a melamine resin, a urethane resin, an allyl resin, a silicon resin, an epoxy resin, a furan resin, and an acetylcellulose resin.

The substrate layer 11 may be composed of a polyester resin or a polyamide resin, from the viewpoint of formability. Examples of the polyester resin include polyethylene terephthalate, polybutylene terephthalate, and polyethylene naphthalate. Examples of the polyamide resin include nylon 6, nylon 6,6, a copolymer of nylon 6 and nylon 6,6, nylon 9T, nylon 10, polymetaxylylene adipamide (MXD6), nylon 11, and nylon 12.

The substrate layer 11 may be in the form of a stretched film or an unstretched film or in the form of a coating film. Furthermore, the substrate layer 11 may be a single layer or a multilayer, and the substrate layer 11 as a multilayer may be composed of a laminate of layers made of different resins. When the substrate layer 11 is in the form of a film, the film may be obtained by coextrusion or lamination via an adhesive. When the substrate layer 11 is a coating film, the coating film may be obtained by a plurality of times of coating with a coating film-forming composition. The substrate layer 11 may be a multilayer including a film and a coating film in combination.

When the resins described above are used in the form of a film, the substrate layer 11 may be a biaxially stretched film. In that case, the packaging material 10 has good formability. The biaxially stretched film may be obtained, for example, by sequential biaxial stretching, tubular biaxial stretching, simultaneous biaxial stretching, or the like. The biaxially stretched film may be obtained by tubular biaxial stretching, from the viewpoint of achieving better deep drawing formability.

The substrate layer 11 has a thickness of 10 µm or more and 60 µm or less. The substrate layer 11 may have a thickness of 15 µm or more, 20 µm or more, 25 µm or more, 50 µm or less, 40 µm or less, or 35 µm or less. When the substrate layer 11 has a thickness in the above range, it is easy to control the loop stiffness value of the substrate layer 11 to be in a suitable range.

The loop stiffness value of the substrate layer 11 is 2 mN or more and 20 mN or less, from the viewpoint of the stiffness, thermal deformation resistance, and the like of the packaging material 10. The loop stiffness value of the substrate layer 11 may be 2.5 mN or more and 17 mN or less, 3 mN or more and 15 mN or less, or 4.5 mN or more and 14.5 mN or less. The loop stiffness value of the substrate layer 11 corresponds to stress applied when the substrate layer 11 is bent into a loop and compressed in the diametrical direction of the loop. In general, a film having a larger loop stiffness value has higher stiffness. The loop stiffness value of the substrate layer 11 is measured, for example, by a loop stiffness tester described later in the examples.

### <First adhesive layer>

The first adhesive layer 12a adheres the substrate layer 11 to the barrier layer 13. Specific examples of the material for forming the first adhesive layer 12a include a polyurethane resin obtained by allowing a bi- or higher-functional isocyanate compound (polyfunctional isocyanate compound) to act as a curing agent on a base resin such as a polyester polyol, a polyether polyol, an acrylic polyol, or a carbonate polyol. The various polyols can be used singly or in combination of two or more, according to the function, performance, and the like required for the packaging material 10. Other than the above materials, examples of the material for forming the first adhesive layer 12a include a material obtained by adding a curing agent to an epoxy resin as a base resin.

The first adhesive layer 12a is composed of an adhesive composition containing the base resin and the curing agent described above. In addition to the adhesive composition, the first adhesive layer 12a may contain other various additives, stabilizers, and the like, according to the performance required for the adhesive layer. The first adhesive layer 12a may contain, as an additive, for example, a tin, titanium, or zirconium urethanization catalyst, or an overt curing agent or a latent curing agent, in order to accelerate curing. The overt curing agent or the latent curing agent may be, for example, an amine compound. These may be used singly or in combination of two or more.

The adhesive composition may contain, as a curing agent, at least one polyfunctional isocyanate compound selected from the group consisting of an alicyclic isocyanate multimer and an isocyanate multimer having a molecular structure containing an aromatic ring. Examples of the polyfunctional isocyanate compound include an isocyanurate of isophorone diisocyanate, an adduct of tolylene diisocyanate, an adduct of hexamethylene diisocyanate, a biuret and isocyanurate of hexamethylene diisocyanate, a biuret and isocyanurate of tolylene diisocyanate, an adduct, biuret, and isocyanurate of diphenylmethane diisocyanate, and an adduct, biuret, and isocyanurate of xylylene diisocyanate.

The adhesive composition may contain, as a curing agent, a combination of an alicyclic isocyanate multimer and an isocyanate multimer having a molecular structure containing an aromatic ring. The use of these materials in combination tends to achieve even higher heat resistance.

The adhesive composition may contain at least one polyol selected from the group consisting of a polyester polyol, an acrylic polyol, and a polycarbonate diol, from the viewpoint of achieving even higher heat resistance. The adhesive composition may be a polyester polyol, from the viewpoint of achieving higher heat resistance.

In the adhesive composition, the ratio (NCO/OH) of the number of isocyanate groups contained in the polyfunctional isocyanate compound to the number of hydroxyl groups contained in the polyol may be 1.5 or more and 40.0 or less, or 15.0 or more and 30.0 or less. When the ratio is 1.5 or more, a reaction of the curing agent occurs, and a by-product such as a urea resin or a biuret resin is more likely to be formed. An active hydrogen group contained in such a by-product interacts with a polar group of an adjacent layer, and achieves even higher interface adhesion of the first adhesive layer 12a to the substrate layer 11 and the barrier layer 13. Thus, the packaging material 10 tends to have higher heat resistance. When the ratio is 40.0 or less, the packaging material 10 can have even higher lamination strength under room temperature environmental conditions and high temperature environmental conditions.

The thickness of the first adhesive layer 12a is not particularly limited, and may be, for example, 1 µm or more and 10 µm or less, or 2 µm or more and 7 µm or less, from the viewpoint of obtaining the desired adhesive strength, conformability, processability, and the like.

The mass per unit area of the first adhesive layer 12a may be 2.0 g/m² or more and 6.0 g/m² or less, 2.5 g/m² or more and 5.0 g/m² or less, or 3.0 g/m² or more and 4.0 g/m² or less, from the viewpoint of ensuring higher lamination strength under both room temperature environmental conditions and high temperature environmental conditions and achieving better deep drawing formability.

### <Barrier layer>

The barrier layer 13 has water vapor barrier properties to prevent moisture from entering the power storage device. The barrier layer 13 may have ductility for deep drawing. The barrier layer 13 may be, for example, a metal foil of various metals such as aluminum, stainless steel, or copper, or a metal vapor deposition film, an inorganic oxide vapor deposition film, a carbon-containing inorganic oxide vapor deposition film, a film provided with such a vapor deposition film, or the like. The film provided with a vapor deposition film may be, for example, an aluminum vapor deposition film, or an inorganic oxide vapor deposition film. These can be used singly or in combination of two or more. The barrier layer 13 may be a metal foil, an aluminum foil, or a stainless steel foil, from the viewpoint of mass (specific gravity), barrier performance such as moisture resistance, processability, and cost.

The aluminum foil may be an annealed soft aluminum foil in particular, from the viewpoint of obtaining the desired ductility during forming. The aluminum foil may contain iron, in order to obtain higher pinhole resistance and ductility during forming. The iron content in the aluminum foil may be 0.1 mass% or more and 9.0 mass% or less, or 0.5 mass% or more and 2.0 mass% or less, with respect to 100 mass% of aluminum foil. When the iron content is 0.1 mass% or more, the packaging material 10 can have higher pinhole resistance and ductility. When the iron content is 9.0 mass% or less, the packaging material 10 can have higher flexibility. The aluminum foil may be an untreated aluminum foil, or may be a degreased aluminum foil, from the viewpoint of obtaining corrosion resistance. When the aluminum foil is degreased, only one surface of the aluminum foil may be degreased, or both surfaces of the aluminum foil may be degreased.

The thickness of the barrier layer 13 is not particularly limited, and may be 9 µm or more and 200 µm or less, 15 µm or more and 100 µm or less, 30 µm or more and 80 µm or less, or 40 µm or more and 60 µm or less, considering barrier performance, pinhole resistance, and processability.

### <First and second anticorrosion treatment layers>

The first anticorrosion treatment layer 14a and the second anticorrosion treatment layer 14b are provided to prevent corrosion of the metal foil (metal foil layer) or the like constituting the barrier layer 13. The first anticorrosion treatment layer 14a improves the adhesion between the barrier layer 13 and the first adhesive layer 12a. The second anticorrosion treatment layer 14b improves the adhesion between the barrier layer 13 and the thermal adhesive resin layer 15. The first anticorrosion treatment layer 14a and the second anticorrosion treatment layer 14b may have the same configuration or different configurations. The first anticorrosion treatment layer 14a and the second anticorrosion treatment layer 14b (hereinafter also simply referred to as "anticorrosion treatment layers 14a and 14b") are formed, for example, by degreasing treatment, hydrothermal conversion treatment, anodic oxidation treatment, chemical conversion treatment, or a combination of these treatments.

Examples of the degreasing treatment include acid degreasing treatment and alkaline degreasing treatment. In the acid degreasing treatment, an inorganic acid such as sulfuric acid, nitric acid, hydrochloric acid, or hydrofluoric acid may be used singly or as a mixture. The acid degreasing treatment may be performed using an acid degreasing agent obtained by dissolving a fluorine-containing compound such as ammonium hydrogen difluoride in the inorganic acid. In that case, when the barrier layer 13 is composed of an aluminum foil in particular, an aluminum degreasing effect is obtained. Furthermore, the acid degreasing agent can form a fluoride of aluminum in a passive state, and thus is effective in terms of corrosion resistance. The alkaline degreasing treatment may be performed using sodium hydroxide or the like.

Examples of the hydrothermal conversion treatment include boehmite treatment in which an aluminum foil is immersed in boiling water containing triethanolamine. Examples of the anodic oxidation treatment include alumite treatment.

The chemical conversion treatment may be an immersion-type chemical conversion treatment or a coating-type chemical conversion treatment. Examples of the immersion-type chemical conversion treatment include chromate treatment, zirconium treatment, titanium treatment, vanadium treatment, molybdenum treatment, calcium phosphate treatment, strontium hydroxide treatment, cerium treatment, ruthenium treatment, and various chemical conversion treatments using mixed phases of these materials. Examples of the coating-type chemical conversion treatment include a treatment in which a coating agent having anticorrosion properties is applied onto the barrier layer 13.

Of these anticorrosion treatments, before any of the hydrothermal conversion treatment, the anodic oxidation treatment, and the chemical conversion treatment is performed to form at least part of the anticorrosion treatment layers, the aforementioned degreasing treatment may be performed in advance. When the barrier layer 13 is composed of a degreased metal foil such as an annealed metal foil, no degreasing treatment is required to form the anticorrosion treatment layers 14a and 14b.

The coating agent used in the coating-type chemical conversion treatment may contain, for example, trivalent chromium. The coating agent may contain at least one polymer selected from the group consisting of a cationic polymer and an anionic polymer described later.

Of the treatments described above, in the hydrothermal conversion treatment and the anodic oxidation treatment in particular, the surface of an aluminum foil is dissolved with a treatment agent to form an aluminum compound (boehmite or alumite) having high corrosion resistance. Thus, a co-continuous structure extending from the barrier layer 13 composed of an aluminum foil to the anticorrosion treatment layers 14a and 14b is obtained, and these treatments are therefore included in the definition of chemical conversion treatment. However, as described later, the anticorrosion treatment layers 14a and 14b can be formed only by a pure coating method that is not included in the definition of chemical conversion treatment. In such a coating method, for example, a sol of a rare-earth element oxide such as cerium oxide with an average particle size of 100 nm or less may be used as a material that has an anticorrosion effect (inhibitor effect) for aluminum and is preferable in terms of environmental aspects. The use of such a rare-earth element oxide sol allows a metal foil such as an aluminum foil to have an anticorrosion effect even when a typical coating method is used.

Examples of the rare-earth element oxide sol include sols containing various solvents such as an aqueous solvent, an alcoholic solvent, a hydrocarbon solvent, a ketone solvent, an ester solvent, or an ether solvent. The sol may be an aqueous sol.

To stabilize the dispersion of the rare-earth element oxide sol, the rare-earth element oxide sol typically contains, as a dispersion stabilizer, an inorganic acid such as nitric acid, hydrochloric acid, or phosphoric acid, or a salt thereof, or an organic acid such as acetic acid, malic acid, ascorbic acid, or lactic acid. Of these dispersion stabilizers, phosphoric acid in particular is expected to achieve the following effects (1) to (4) in the packaging material 10.
(1) Stabilized dispersion of sol
(2) Higher adhesion to the barrier layer 13 due to aluminum chelating ability of phosphoric acid
(3) Corrosion resistance obtained by capture of aluminum ions (passivation)
(4) Higher cohesive force of the anticorrosion treatment layers (oxide layers) 14a and 14b due to high probability of dehydration condensation of phosphoric acid at low temperature

The anticorrosion treatment layers 14a and 14b composed of the rare-earth element oxide sol are an aggregate of inorganic particles, and this may cause the layers to have a low cohesive force even after dry curing. Thus, in such a case, in order to compensate the cohesive force, the anticorrosion treatment layers 14a and 14b may be formed as composite layers using an anionic polymer or a cationic polymer.

The anticorrosion treatment layers 14a and 14b are not limited to the layers described above. For example, the anticorrosion treatment layers 14a and 14b may be formed using a treatment agent obtained by adding phosphoric acid and a chromium compound to a resin binder (aminophenol, etc.), as in a coating-type chromate treatment that is a known technique. The use of the treatment agent allows the anticorrosion treatment layers 14a and 14b to have both anticorrosion properties and adhesion. Alternatively, it is possible to allow the anticorrosion treatment layers 14a and 14b to have both anticorrosion properties and adhesion by using a single-component coating agent prepared in advance by combining a rare-earth element oxide sol with a polycationic polymer or a polyanionic polymer, although the stability of the coating agent needs to be considered.

The mass per unit area of the anticorrosion treatment layers 14a and 14b may be 0.005 g/m² or more and 0.200 g/m² or less, or 0.010 g/m² or more and 0.100 g/m² or less, regardless of whether the anticorrosion treatment layers 14a and 14b have a multilayer structure or a single-layer structure. When the mass per unit area is 0.005 g/m² or more, the barrier layer 13 is more likely to have anticorrosion properties. Even if the mass per unit area exceeds 0.200 g/m², there is little change in the anticorrosion properties. When a rare-earth element oxide sol is used and the coating is thick, thermal curing during drying may be insufficient, causing a lower cohesive force. The thickness of the anticorrosion treatment layers 14a and 14b can be converted from the specific gravity of the anticorrosion treatment layers 14a and 14b.

From the viewpoint that the adhesion between the sealant layer 16 and the barrier layer 13 is more likely to be maintained, for example, the anticorrosion treatment layers 14a and 14b may contain cerium oxide, 1 part by mass or more and 100 parts by mass or less of phosphoric acid or phosphate with respect to 100 parts by mass of the cerium oxide, and a cationic polymer, or may be formed by applying chemical conversion treatment to the barrier layer 13, or may be formed by applying chemical conversion treatment to the barrier layer 13 and contain a cationic polymer.

### <Sealant layer and thermal adhesive resin layer >

The sealant layer 16 allows the packaging material 10 to have heat sealability, and is heat sealed on the inner side during assembly of the power storage device. The thermal adhesive resin layer 15 adheres the sealant layer 16 to the barrier layer 13, and contains an adhesive resin.

In the embodiment, the sealant layer 16 contains a polypropylene resin that is a base resin. The polypropylene resin is a resin obtained from a polymerization monomer containing propylene. Examples of the polypropylene resin include homopolypropylene, block polypropylene, and random polypropylene. These may be used singly or in combination of two or more. The polypropylene resin may contain at least one of homopolypropylene and block polypropylene, from the viewpoint of the stiffness of the sealant layer 16.

The content of polypropylene resin in the sealant layer 16 is not particularly limited, and may be, for example, 30 mass% or more and 100 mass% or less. The content may be 50 mass% or more and 95 mass% or less, or 70 mass% or more and 90 mass% or less, from the viewpoint of the stiffness of the sealant layer 16.

In addition to the base resin, the sealant layer 16 may contain an additive resin containing a polyethylene resin, or a block copolymer compatible with a polypropylene resin. The polyethylene resin is a resin obtained from a polymerization monomer containing ethylene, and imparts softness (stress relaxation properties). Examples of the polyethylene resin include low-density polyethylene (LDPE), linear low-density polyethylene (LLDPE), medium-density polyethylene (MDPE), high-density polyethylene (HDPE), and a polyethylene elastomer. These may be used singly or in combination of two or more. The polyethylene resin may contain a polyethylene elastomer, which can impart softness in particular. The block copolymer compatible with a polypropylene resin only needs to be at least compatible with a polypropylene resin, and may be, for example, one of the compatibilizers described later.

The polyethylene elastomer may be an elastomer containing α-olefin as a comonomer. Specific examples of such a polyethylene elastomer include a compound obtained by copolymerizing, with ethylene, α-olefin composed of at least one selected from 1-butene, 1-pentene, 1-hexene, 1-octene, and 4-methyl-1-pentene.

When the sealant layer 16 contains a polyethylene resin as an additive resin, the content of polyethylene resin in the sealant layer 16 is not particularly limited, and may be, for example, 1 mass% or more and 70 mass% or less. The content may be 5 mass% or more and 50 mass% or less, 10 mass% or more and 30 mass% or less, or 10 mass% or more and 20 mass% or less, from the viewpoint of the stiffness of the sealant layer 16. When the sealant layer 16 contains a block copolymer compatible with a polypropylene resin, the content of block copolymer in the sealant layer 16 is not particularly limited, and may be, for example, 1 mass% or more and 70 mass% or less. The content may be 5 mass% or more and 50 mass% or less, 10 mass% or more and 30 mass% or less, or 10 mass% or more and 20 mass% or less, from the viewpoint of the stiffness of the sealant layer 16.

In addition to the base resin, the sealant layer 16 may contain the additive resin and a compatibilizer. The compatibilizer efficiently imparts softness by causing a polyethylene resin to be finely dispersed in the base resin composed of a polypropylene resin. In the embodiment, the compatibilizer has a portion compatible with a polypropylene resin (hereinafter also referred to as a "PP compatible portion"), and a portion compatible with a polyethylene resin (hereinafter also referred to as a "PE compatible portion"). Specific examples of the compatibilizer include a graft copolymer having a PP compatible portion as a main chain and a PE compatible portion as a side chain, a graft copolymer having a PE compatible portion as a main chain and a PP compatible portion as a side chain, and a block copolymer having a PP compatible portion and a PE compatible portion as blocks. The compatibilizer may be a block copolymer having at least a PP compatible portion as a block, a block copolymer having a PP compatible portion and a PE compatible portion as blocks, or the like, from the viewpoint of obtaining higher dispersibility. Examples of such a block copolymer include a block copolymer of polypropylene and polyethylene (PP·PE-block copolymer), and a block copolymer of polyethylene and polyethylene butylene (PE·PE-butylene block copolymer). In the PE·PE-butylene block copolymer, a butylene portion corresponds to the PP compatible portion.

The content of compatibilizer in the sealant layer 16 is not particularly limited, and may be, for example, 1 mass% or more and 50 mass% or less. The content may be 2 mass% or more and 30 mass% or less, 5 mass% or more and 15 mass% or less, or 6 mass% or more and 10 mass% or less, from the viewpoint of the stiffness of the sealant layer 16.

The total content of the additive resin containing a polyethylene resin and the compatibilizer in the sealant layer 16 may be 1 mass% or more and 70 mass% or less, 2 mass% or more and 50 mass% or less, or 5 mass% or more and 30 mass% or less.

The mass ratio of the compatibilizer to the additive resin containing a polyethylene resin (additive resin containing a polyethylene resin:compatibilizer) may be, for example, 5:1 to 1:5. The mass ratio may be 2:1 to 1:4, or 1:1.1 to 1:3.

The sealant layer 16 may contain, as another additive component, for example, a slip agent, an anti-blocking agent, an antioxidant, a photostabilizer, a crystal nucleating agent, a flame retardant, and the like, if necessary. The content of such an additive component may be, for example, 5 mass% or less, when the total mass of the sealant layer 16 is 100 mass%.

The thermal adhesive resin layer 15 is not particularly limited, as long as the thermal adhesive resin layer 15 contains a resin adhering the sealant layer 16 to the barrier layer 13, and the resin may be an acid-modified polyolefin resin or the like.

The acid-modified polyolefin resin may be a polyolefin resin modified with maleic anhydride, carboxylic acid, or sulfonic acid, or a derivative thereof. The acid-modified polyolefin resin may be, for example, a graft copolymer, a block copolymer, or a random copolymer. The acid-modified polyolefin resin may be a polyolefin resin graft modified with maleic anhydride, from the viewpoint of adhesion to the barrier layer 13.

The thermal adhesive resin layer 15 may contain, for example, various additives such as various compatible and incompatible elastomers, flame retardants, slip agents, anti-blocking agents, antioxidants, photostabilizers, crystal nucleating agents, and tackifiers, if necessary.

The ratio between the thickness of the sealant layer 16 to the thickness of the thermal adhesive resin layer 15 (thickness of the sealant layer 16/thickness of the thermal adhesive resin layer 15) may be 1 or more, 1.1 or more, or 1.5 or more. The ratio between the thickness of the sealant layer 16 to the thickness of the thermal adhesive resin layer 15 (thickness of the sealant layer 16/thickness of the thermal adhesive resin layer 15) may be 10 or less, 3 or less, or 2.2 or less.

As described later, the sealant layer 16 and the thermal adhesive resin layer 15 are simultaneously formed, and thus the sealant layer 16 and the thermal adhesive resin layer 15 are difficult to separate. Therefore, in the embodiment, the physical properties of the innermost layer of the packaging material 10 are regarded as the physical properties of the laminate of the sealant layer 16 and the thermal adhesive resin layer 15. The total thickness of the sealant layer 16 and the thermal adhesive resin layer 15 (i.e., the thickness of the laminate) is larger than the thickness of the substrate layer 11 that is the outermost layer of the packaging material 10, and is 30 µm or more and 120 µm or less. The thickness of the laminate may be 45 µm or more and 100 µm or less, 65 µm or more and 85 µm or less, or 70 µm or more and 80 µm or less. When the total thickness of the sealant layer 16 and the thermal adhesive resin layer 15 is in the above range, it is easy to control the loop stiffness value of the laminate to be in a suitable range. In addition, it is possible to prevent the formation of pinholes in the sealant layer 16, thus leading to a lower risk of breakage of the packaging material 10. Furthermore, the loop stiffness value of the laminate may be, for example, 10 mN or more and 80 mN or less. The loop stiffness value of the laminate may be larger than the loop stiffness value of the substrate layer 11. The loop stiffness value of the laminate may be 15 mN or more, 25 mN or more, 35 mN or more, 40 mN or more, 80 mN or less, 70 mN or less, 60 mN or less, 50 mN or less, or 45 mN or less.

In the embodiment, in the case where (I) represents the laminate of the sealant layer 16 and the thermal adhesive resin layer 15 and (II) represents the substrate layer 11, the ratio (I/II) between the thickness of the laminate (I) and the thickness of the layer (II) is 1.0 or more and 8.0 or less. In addition, the ratio (I/II) between the loop stiffness value of the laminate (I) and the loop stiffness value of the layer (II) may be, for example, 1.0 or more and 15 or less. In this case, the hardness (stiffness) of the laminate (I) and the hardness (stiffness) of the layer (II) are well balanced. Thus, when pressure is applied from the substrate layer 11 to the sealant layer 16 while the sealant layer 16 is adhered to the power storage device, the pressure transmitted to the power storage device can be uniformly distributed.

The ratio (I/II) between the thickness of the laminate (I) and the thickness of the layer (II) may be 1.5 or more and 6.5 or less, 2.0 or more and 5.0 or less, or 2.3 or more and 3.2 or less. Furthermore, the ratio (I/II) between the loop stiffness value of the laminate (I) and the loop stiffness value of the layer (II) may be 2.5 or more and 11.0 or less, 3.0 or more and 11.0 or less, 3.5 or more and 10 or less, 7.0 or more and 10 or less, 7.5 or more and 9.0 or less, 8.0 or more and 10.0 or less, 8.0 or more and 9.0 or less, or 8.0 or more and 8.7 or less.

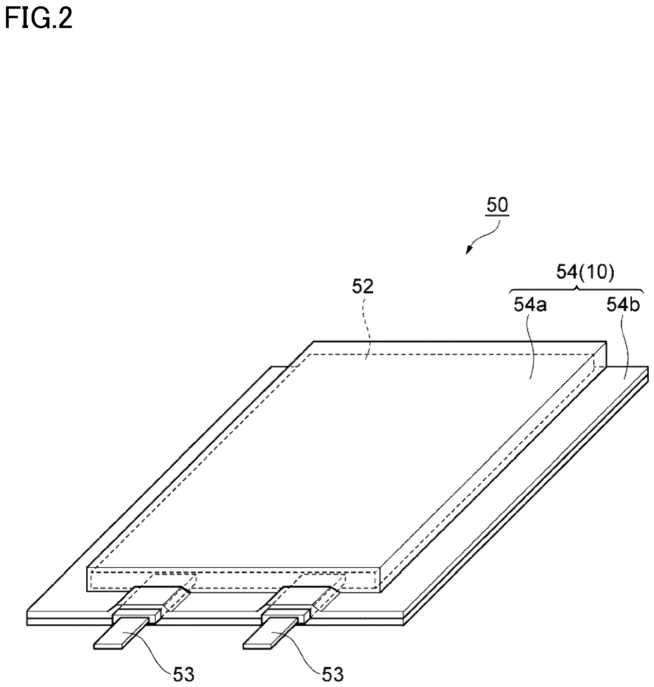

Fig. 2 is a perspective view of a power storage device according to the embodiment of the present disclosure. As shown in Fig. 2, an all-solid-state battery 50 as a power storage device includes a power storage element 52, two metal terminals (current output terminals) 53 for outputting an electric current from the power storage element 52 to the outside, and a packaging bag 54 in which the power storage element 52 is sealed.

The packaging material 10 is used to form the packaging bag 54 having a bag body 54a, and a seal portion 54b provided in the bag body 54a, and the packaging bag 54 is used as a container that houses the power storage element 52. In the packaging material 10, the substrate layer 11 is the outermost layer, and the sealant layer 16 is the innermost layer. Thus, the packaging bag 54 capable of housing the power storage element 52 is formed by folding a single packaging material 10 in two or stacking two packaging materials 10 so that the substrate layer 11 faces the outside of the all-solid-state battery 50 and the sealant layer 16 faces the inside of the all-solid-state battery 50, followed by heat sealing of the edge portion of the packaging material 10 or the two packaging materials 10.

The metal terminals 53 are held by the packaging bag 54 in which the sealant layer 16 is located on the inner side. The metal terminals 53 may be held by the packaging bag 54 via a tab sealant. The metal terminals 53 are part of a current collector extended to the outside of the packaging material 10, and are composed of a metal foil such as a copper foil or an aluminum foil.

The power storage element 52 includes a pair of electrodes, and a solid electrolyte sandwiched between the pair of electrodes. One of the pair of electrodes is a positive electrode, and the other electrode is a negative electrode. Examples of the solid electrolyte include a sulfide solid electrolyte and an oxide solid electrolyte.

### [Method of producing packaging material]

Next, an example of a method of producing the packaging material 10 shown in Fig. 1 will be described. The method of producing the packaging material 10 is not limited to the following method.

The method of producing the packaging material 10 according to the embodiment includes a step of forming the anticorrosion treatment layers 14a and 14b on the barrier layer 13, a step of bonding the substrate layer 11 to the barrier layer 13 using the first adhesive layer 12a, a step of further laminating the adhesive resin layer 15 and the sealant layer 16 on the surface of the barrier layer 13 on the anticorrosion treatment layer 14b side, and if necessary, an aging step.

### (Step of laminating anticorrosion treatment layers on barrier layer)

In this step, the anticorrosion treatment layers 14a and 14b are formed on the barrier layer 13. As described above, the anticorrosion treatment layers 14a and 14b may be formed on the barrier layer 13 by applying degreasing treatment, hydrothermal conversion treatment, anodic oxidation treatment, or chemical conversion treatment to the barrier layer 13, or applying a coating agent having anticorrosion properties to the barrier layer 13.

The anticorrosion treatment layers 14a and 14b as a multilayer may be formed, for example, by applying, to the barrier layer 13, a coating liquid (coating agent) for forming an anticorrosion treatment layer on the lower side (the barrier layer 13 side), and baking the coating agent to form a first layer, and then applying, to the first layer, a coating liquid (coating agent) for forming an anticorrosion treatment layer on the upper side, and baking the coating agent to form a second layer.

The degreasing treatment may be performed by spraying or immersion. The hydrothermal conversion treatment and the anodic oxidation treatment may be performed by immersion. The chemical conversion treatment may be performed by a method appropriately selected from immersion, spraying, coating, and the like, according to the type of chemical conversion treatment.

The coating agent having anticorrosion properties may be applied using various coating methods such as gravure coating, reverse coating, roll coating, or bar coating.

As described above, various treatments to the barrier layer 13 may be applied to one or both surfaces of the metal foil. When treatment is applied to one surface of the barrier layer 13, the treatment may be applied to the surface of the barrier layer 13 in contact with the sealant layer 16. The treatment may also be applied to the surface of the substrate layer 11, if necessary.

The amounts of coating agents for forming the first and second layers may be 0.005 g/m² or more and 0.200 g/m² or less, or 0.010 g/m² or more and 0.100 g/m² or less.

If necessary, dry curing may be performed at a base material temperature in the range of 60 °C or higher and 300°C or lower, according to the drying conditions for the anticorrosion treatment layers 14a and 14b used.

### (Step of bonding substrate layer to barrier layer)

In this step, the substrate layer 11 is bonded via the first adhesive layer 12a to the barrier layer 13 provided with the anticorrosion treatment layers 14a and 14b. The substrate layer 11 is bonded to the surface of the barrier layer 13 on the anticorrosion treatment layer 14a side. The bonding is performed using a method such as dry lamination, non-solvent lamination, or wet lamination to bond the layers with the material for forming the first adhesive layer 12a described above. The dry coating weight of the first adhesive layer 12a may be, for example, 1 g/m² or more and 10 g/m² or less, or 2 g/m² or more and 7 g/m² or less.

### (Step of laminating thermal adhesive resin layer and sealant layer)

In the step of laminating the thermal adhesive resin layer and the sealant layer, the thermal adhesive resin layer 15 and the sealant layer 16 are formed on the surface of the barrier layer 13 on the anticorrosion treatment layer 14b side. The thermal adhesive resin layer 15 and the sealant layer 16 may be formed by sandwich lamination of the thermal adhesive resin layer 15 together with the sealant layer 16 using an extrusion laminator. Alternatively, the thermal adhesive resin layer 15 and the sealant layer 16 may be laminated by tandem lamination or coextrusion in which the thermal adhesive resin layer 15 and the sealant layer 16 are extruded. When the thermal adhesive resin layer 15 and the sealant layer 16 are formed, for example, the components are mixed so that the thermal adhesive resin layer 15 and the sealant layer 16 are configured as described above. The thermal adhesive resin layer 15 is formed using a thermal adhesive resin layer forming resin composition containing the components of the thermal adhesive resin layer 15 described above. The sealant layer 16 is formed using a sealant layer forming resin composition containing the components of the sealant layer 16 described above.

By performing the step of laminating the thermal adhesive resin layer and the sealant layer, a laminate structure is obtained in which the substrate layer 11, the first adhesive layer 12a, the first anticorrosion treatment layer 14a, the barrier layer 13, the second anticorrosion treatment layer 14b, the thermal adhesive resin layer 15, and the sealant layer 16 are laminated in this order as shown in Fig. 1.

The thermal adhesive resin layer 15 may be laminated by preparing a material by dry blending according to the material formulation described above, and directly extruding the material using an extrusion laminator. Alternatively, the thermal adhesive resin layer 15 may be laminated by preparing granules obtained in advance by melt blending using a melt-kneading device such as a single-screw extruder, a twin-screw extruder, or a Brabender mixer, and extruding the granules using an extrusion laminator.

The sealant layer 16 may be laminated by preparing a material by dry blending the components of the sealant layer forming resin composition, and directly extruding the material using an extrusion laminator. Alternatively, the thermal adhesive resin layer 15 and the sealant layer 16 may be laminated by preparing granules obtained in advance by melt blending using a melt-kneading device such as a single-screw extruder, a twin-screw extruder, or a Brabender mixer, and extruding the granules as the thermal adhesive resin layer 15 and the sealant layer 16 by tandem lamination or coextrusion using an extrusion laminator. Alternatively, the thermal adhesive resin layer 15 and the sealant layer 16 may be laminated by forming a sealant layer as a cast film in advance using the sealant layer forming resin composition, and performing sandwich lamination of the sealant layer together with an adhesive resin. The thermal adhesive resin layer 15 and the sealant layer 16 may be formed, for example, at a speed (processing speed) of 80 m/min or more, from the viewpoint of productivity.

### (Aging step)

In the aging step, the laminate structure is aged (cured). Aging of the laminate structure can promote the adhesion between the substrate layer 11, the first adhesive layer 12a, the first anticorrosion treatment layer 14a, and the barrier layer 13, and the adhesion between the barrier layer 13, the second anticorrosion treatment layer 14b, the thermal adhesive resin layer 15, and the sealant layer 16. The aging temperature may be 80°C or higher, 100°C or higher, or 120°C or higher, or may be 140°C or lower, 150°C or lower, or 160°C or lower. The aging time may be 1 hour or more, 2 hours or more, or 3 hours or more, or may be 24 hours or less, 48 hours or less, or 72 hours or less.

Thus, the packaging material 10 according to the embodiment as shown in Fig. 1 can be produced.

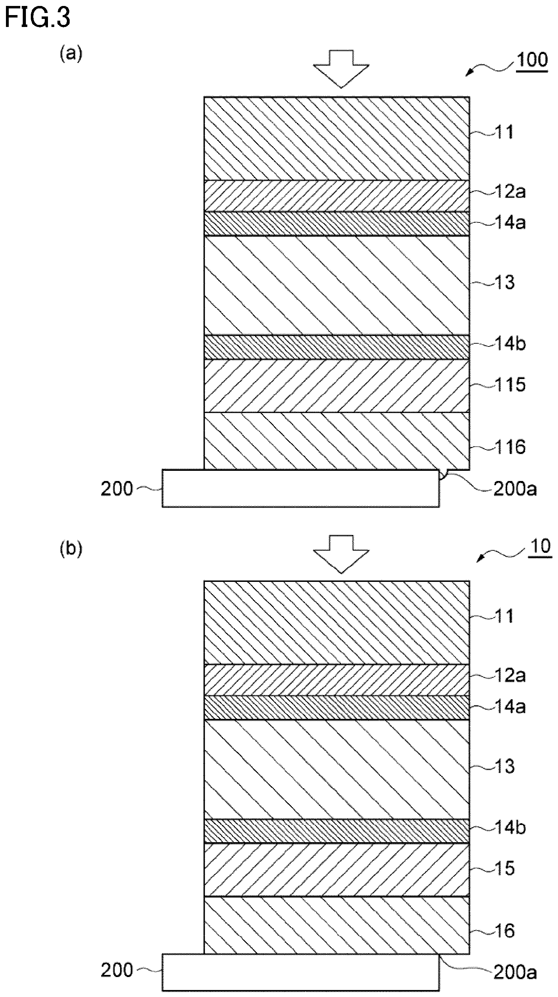

In the following, working effects of the packaging material 10 according to the embodiment will be described with reference to Figs. 3 (a) and (b). Fig. 3 (a) is a schematic cross-sectional view of a packaging material as a comparative example pressed against a rigid body, and Fig. 3 (b) is a schematic cross-sectional view of the power storage device packaging material according to the embodiment pressed against a rigid body. Unlike in the packaging material 10, in a packaging material 100 as a comparative example shown in Fig. 3 (a), the ratio between the loop stiffness value of a laminate of a sealant layer 116 and a thermal adhesive resin layer 115 and the loop stiffness value of the substrate layer 11 is less than 1 or more than 15. Thus, the loop stiffness value of the substrate layer 11 differs significantly from the loop stiffness value of the laminate. Therefore, the stiffness of the laminate of the sealant layer 116 and the thermal adhesive resin layer 115 that is the innermost layer of the packaging material 100 is excessively low (i.e., excessively soft) or excessively high (i.e., excessively hard) as compared with the stiffness of the substrate layer 11 that is the outermost layer of the packaging material 100.

When the packaging material 100 including the laminate having excessively low stiffness is pressed against a rigid body 200, for example, the resin contained in the sealant layer 116 easily flows. Due to the flow of resin, the sealant layer 116 is deformed as shown in Fig. 3 (a). This may cause a large variation in thickness of the sealant layer 116 and the like, resulting in a higher probability of non-uniform application of pressure to the rigid body 200 via the packaging material 100. Under high temperature environmental conditions (e.g., 70°C or higher), the sealant layer 116 is more likely to be deformed, and this tends to lead to an even higher risk of non-uniform application of pressure to the rigid body 200 via the packaging material 100. On the other hand, when the packaging material 100 including the laminate having excessively high stiffness is pressed against the rigid body 200, a force is more likely to be concentrated on a portion of the packaging material 100 that is in contact with an end portion 200a (pressurized end portion, see Fig. 3 (a)) of the rigid body 200. Or a protrusion provided on a surface of the sealant layer 116 according to the unevenness of the substrate layer 11 is less likely to be deformed, and a force is more likely to be concentrated on the protrusion. Such concentration of force tends to cause local application of pressure to the rigid body 200 via the packaging material 100. Thus, not only the laminate having excessively low stiffness but also the laminate having excessively high stiffness tends to lead to non-uniform application of pressure to the rigid body via the packaging material.

On the other hand, in the packaging material 10 according to the embodiment, in the case where (I) represents the laminate of the thermal adhesive resin layer 15 and the sealant layer 16 and (II) represents the substrate layer 11, the loop stiffness value of the laminate (I) is 10 mN or more and 80 mN or less, the loop stiffness value of the layer (II) is 2 mN or more and 20 mN or less, the ratio (I/II) between the loop stiffness value of the laminate (I) and the loop stiffness value of the layer (II) is 1.0 or more and 15 or less, and the ratio (I/II) between the thickness of the laminate (I) and the thickness of the layer (II) is 1.0 or more and 8.0 or less. This makes it possible to set each of the stiffness of the innermost layer of the packaging material 10, the stiffness of the outermost layer of the packaging material 10, and the balance of the stiffnesses in a suitable range. Thus, as shown in Fig. 3 (b), when pressure is applied to the rigid body 200 via the packaging material 10 under high temperature environmental conditions, the packaging material 10 is less likely to be excessively deformed. Therefore, when pressure is applied to the rigid body 200 via the packaging material 10 under high temperature environmental conditions, the pressure can be uniformly applied to the rigid body 200 via the packaging material 10.

The loop stiffness value of a resin layer (substrate layer 11, sealant layer 16, or the like) of the packaging material 10 can be adjusted, for example, by adjusting the thickness of the layer, the degree of crystallinity of resin, the type of resin, or the like. In general, the loop stiffness value of the resin layer increases with an increase in thickness of the resin layer. However, the adjustment of the loop stiffness value of the resin layer by simply adjusting the thickness of the resin layer may lead to an excessively large thickness of the packaging material or insufficient durability of the packaging material. On the other hand, in the embodiment, the thickness of the laminate (I) is 30 µm or more and 120 µm or less, and the thickness of the layer (II) is 10 µm or more and 60 µm or less. In this case, it is possible to ensure the durability of the packaging material 10 while preventing the packaging material 10 from having a large thickness. Thus, for example, the formation of pinholes, breakage, or the like is less likely to occur in the packaging material 10 when pressure is applied under high temperature environmental conditions. In addition, each of the loop stiffness value of the layer or layers (I) and the loop stiffness value of the layer (II) can be securely set in the above range.

In the embodiment, the ratio (I/II) between the loop stiffness value of the laminate (I) and the loop stiffness value of the layer (II) may be 2.5 or more and 11.0 or less. At this time, the ratio (I/II) between the thickness of the laminate (I) and the thickness of the layer (II) may be 1.0 or more and 6.5 or less, the thickness of the laminate (I) may be 45 µm or more and 100 µm or less, and the thickness of the layer (II) may be 15 µm or more and 50 µm or less. In that case, deformation of the packaging material 10 is successfully prevented when pressure is applied under high temperature environmental conditions.

In the embodiment, the ratio (I/II) between the loop stiffness value of the laminate (I) and the loop stiffness value of the layer (II) may be 3.5 or more and 10.0 or less. At this time, the ratio (I/II) between the thickness of the laminate (I) and the thickness of the layer (II) may be 2.0 or more and 5.0 or less, the thickness of the laminate (I) may be 65 µm or more and 85 µm or less, and the thickness of the layer (II) may be 20 µm or more and 40 µm or less. In that case, deformation of the packaging material 10 is more successfully prevented when pressure is applied under high temperature environmental conditions.

In the embodiment, the ratio (I/II) between the loop stiffness value of the laminate (I) and the loop stiffness value of the layer (II) may be 8.0 or more and 9.0 or less. At this time, the ratio (I/II) between the thickness of the laminate (I) and the thickness of the layer (II) may be 2.5 or more and 3.5 or less, the thickness of the laminate (I) may be 65 µm or more and 85 µm or less, and the thickness of the layer (II) may be 20 µm or more and 40 µm or less. In that case, deformation of the packaging material 10 is more successfully prevented when pressure is applied under high temperature environmental conditions.

In the embodiment, the sealant layer 16 may contain a polypropylene resin that is a base resin, and the polypropylene resin may be composed of homopropylene or block polypropylene. In that case, it is possible to prevent the sealant layer 16 from being melted under high temperature environmental conditions.

In the embodiment, the sealant layer 16 may further contain an additive resin containing a polyethylene resin, or a block copolymer compatible with the polypropylene resin. In that case, deformation of the packaging material 10 is more prevented. The content of additive resin or block copolymer in the sealant layer 16 may be 10 mass% or more and 20 mass% or less. In that case, deformation of the packaging material 10 is more successfully prevented.

In the embodiment, the sealant layer 16 may further contain an additive resin containing a polyethylene resin, and a compatibilizer having a portion compatible with the polypropylene resin and a portion compatible with the polyethylene resin. In that case, deformation of the packaging material 10 is successfully prevented. The total content of the additive resin and the compatibilizer in the sealant layer 16 may be 10 mass% or more and 20 mass% or less. In that case, deformation of the packaging material 10 is more successfully prevented.

In the embodiment, the packaging material 10 may be an all-solid-state battery packaging material. In that case, when pressure is applied to the all-solid-state battery 50 via the packaging material 10 under high temperature environmental conditions, the pressure can be uniformly applied to the all-solid-state battery 50 via the packaging material 10. Thus, the all-solid-state battery 50 can successfully achieve higher output. Therefore, the packaging material 10 can have high suitability as a packaging material for the all-solid-state battery 50.

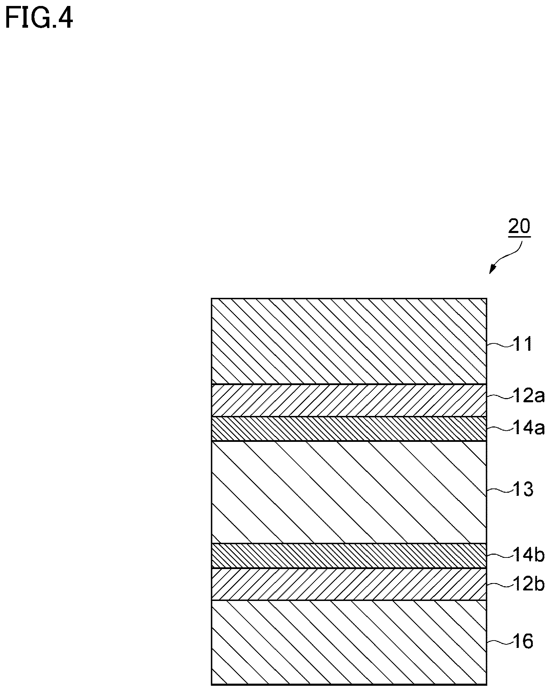

In the following, a packaging material according to a modification of the embodiment will be described with reference to Fig. 4. In the modification, description overlapping with the description of the embodiment will be omitted. Fig. 4 is a schematic cross-sectional view of a power storage device packaging material according to the modification. As shown in Fig. 4, a packaging material 20 is a packaging material used for a power storage device, and includes the substrate layer 11, the barrier layer 13, a second adhesive layer 12b, and the sealant layer 16 that are laminated in this order.

In the packaging material 20, the barrier layer 13 includes the first anticorrosion treatment layer 14a via the first adhesive layer 12a on the substrate layer 11 side, and the second anticorrosion treatment layer 14b on the sealant layer 16 side.

The packaging material 20 differs from the packaging material 10 in that the packaging material 20 includes the second adhesive layer 12b instead of the thermal adhesive resin layer 15. In the packaging material 20, the thickness of the second adhesive layer 12b is significantly smaller than the thickness of the sealant layer 16, and thus the second adhesive layer 12b hardly affects the physical properties of the sealant layer 16. Therefore, in the modification, (I) represents the sealant layer 16, and (II) represents the substrate layer 11. In the modification, each of the ratio between the thickness of the layer (I) and the thickness of the layer (II) and the ratio between the loop stiffness value of the layer (I) and the loop stiffness value of the layer (II) is in the same range as in the embodiment.

### <Second adhesive layer>

The second adhesive layer 12b will be described. The second adhesive layer 12b adheres the barrier layer 13 to the sealant layer 16. The second adhesive layer 12b may be composed of a typical adhesive for adhering the barrier layer 13 to the sealant layer 16.

In the case where the second anticorrosion treatment layer 14b is provided on the barrier layer 13 and includes a layer containing at least one polymer selected from the group consisting of a cationic polymer and an anionic polymer described above, the second adhesive layer 12b may contain a compound (hereinafter also referred to as a "reactive compound") having reactivity with the polymer contained in the second anticorrosion treatment layer 14b.

For example, when the second anticorrosion treatment layer 14b contains a cationic polymer, the second adhesive layer 12b may contain a compound having reactivity with a cationic polymer. When the second anticorrosion treatment layer 14b contains an anionic polymer, the second adhesive layer 12b may contain a compound having reactivity with an anionic polymer. When the second anticorrosion treatment layer 14b contains a cationic polymer and an anionic polymer, the second adhesive layer 12b may contain a compound having reactivity with a cationic polymer and a compound having reactivity with an anionic polymer. However, the second adhesive layer 12b may not necessarily contain the two types of compounds, and may contain a compound having reactivity with both a cationic polymer and an anionic polymer. The phrase "having reactivity" refers to forming a covalent bond with a cationic polymer or an anionic polymer. The second adhesive layer 12b may further contain an acid-modified polyolefin resin.

The compound having reactivity with a cationic polymer may be at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, and the compound having an oxazoline group may be a polyfunctional isocyanate compound, a glycidyl compound, a compound having a carboxy group, and a compound having an oxazoline group described above as a crosslinking agent for allowing a cationic polymer to have a crosslinked structure. Of these, a polyfunctional isocyanate compound may be used due to the high reactivity with a cationic polymer and easy formation of a crosslinked structure.

The compound having reactivity with an anionic polymer may be at least one compound selected from the group consisting of a glycidyl compound, and a compound having an oxazoline group. The glycidyl compound and the compound having an oxazoline group may be a glycidyl compound and a compound having an oxazoline group described above as a crosslinking agent for allowing a cationic polymer to have a crosslinked structure. Of these, a glycidyl compound may be used due to the high reactivity with an anionic polymer.

When the second adhesive layer 12b contains an acid-modified polyolefin resin, the reactive compound may also have reactivity with an acidic group (i.e., form a covalent bond with an acidic group) in the acid-modified polyolefin resin. In such a case, the second adhesive layer 12b has higher adhesion to the second anticorrosion treatment layer 14b. In addition, the acid-modified polyolefin resin has a crosslinked structure, allowing the packaging material 20 to have even higher solvent resistance.

The reactive compound content may be 1 to 10 equivalents relative to the acidic group in the acid-modified polyolefin resin. When the reactive compound content is 1 or more equivalents, the reactive compound sufficiently reacts with the acidic group in the acid-modified polyolefin resin. If the reactive compound content exceeds 10 equivalents, a crosslinking reaction with the acid-modified polyolefin resin is sufficiently saturated, and thus the presence of unreacted material may lead to deterioration in various performances. Therefore, for example, the reactive compound content may be 5 parts by mass or more and 20 parts by mass or less (solid content ratio) with respect to 100 parts by mass of acid-modified polyolefin resin.

The acid-modified polyolefin resin is obtained by introducing an acidic group into a polyolefin resin. The acidic group may be a carboxy group, a sulfonic acid group, an acid anhydride group, or the like. The acidic group may be a maleic anhydride group, a (meth)acrylic acid group, or the like. The acid-modified polyolefin resin may be, for example, similar to a modified polyolefin resin used to form the sealant layer 16.

The second adhesive layer 12b may contain various additives such as a flame retardant, a slip agent, an anti-blocking agent, an antioxidant, a photostabilizer, and a tackifier.

The second adhesive layer 12b may contain, for example, acid-modified polyolefin, and at least one curing agent selected from the group consisting of a polyfunctional isocyanate compound, a glycidyl compound, a compound having a carboxy group, a compound having an oxazoline group, and a carbodiimide compound, from the viewpoint of preventing reduction in heat seal strength when corrosive gas such as hydrogen sulfide, an electrolyte solution, or the like is involved and the viewpoint of further preventing reduction in insulating properties. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl)carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, and N,N'-di-p-tolylcarbodiimide.

The adhesive for forming the second adhesive layer 12b may be, for example, a polyurethane adhesive containing polyisocyanate and polyester polyol composed of hydrogenated dimer fatty acid and diol. The adhesive may be a polyurethane resin obtained by allowing a bi- or higher-functional isocyanate compound to act on a base resin such as a polyester polyol, a polyether polyol, an acrylic polyol, or a carbonate polyol, or an epoxy resin obtained by allowing an amine compound or the like to act on a base resin having an epoxy group, from the viewpoint of heat resistance.

The thickness of the second adhesive layer 12b is not particularly limited, and may be 1 µm or more and 10 µm or less, or 2 µm or more and 7 µm or less, from the viewpoint of obtaining the desired adhesive strength, processability, and the like.

Next, an example of a method of producing the packaging material 20 shown in Fig. 4 will be described. The method of producing the packaging material 20 is not limited to the following method.

The method of producing the packaging material 20 according to the modification includes a step of forming the anticorrosion treatment layers 14a and 14b on the barrier layer 13, a step of bonding the substrate layer 11 to the barrier layer 13 using the first adhesive layer 12a, a step of bonding the sealant layer 16 via the second adhesive layer 12b on the surface of the barrier layer 13 on the anticorrosion treatment layer 14b side to obtain a laminate structure, and if necessary, a step of aging the obtained laminate structure. The steps up to the step of bonding the substrate layer 11 to the barrier layer 13 using the first adhesive layer 12a can be performed in the same manner as in the method of producing the packaging material 10 described above. The step of aging the obtained laminate structure can be performed in the same manner as in the method of producing the packaging material 10 described above.

### (Step of laminating second adhesive layer and sealant layer)

In the step of laminating the second adhesive layer and the sealant layer, the sealant layer 16 is bonded via the second adhesive layer 12b to the surface of the barrier layer 13 on the anticorrosion treatment layer 14b side to obtain a laminate structure. The bonding may be performed by a method such as a wet process or dry lamination.

In the wet process, a solution or a dispersion of the adhesive for forming the second adhesive layer 12b is applied onto the anticorrosion treatment layer 14b, and the solvent is evaporated at a predetermined temperature and dried to form a film, followed by baking if necessary. Then, the sealant layer 16 is laminated to produce the packaging material 20. The adhesive may be applied by any of the various coating methods described above. The dry coating weight of the second adhesive layer 12b may be, for example, the same as that of the first adhesive layer 12a.

In this case, the sealant layer 16 can be formed, for example, by a melt extrusion molding machine using the sealant layer forming resin composition containing a base resin, an additive resin, and a compatibilizer described above. The processing speed of the melt extrusion molding machine may be 80 m/min or more, from the viewpoint of productivity.

The packaging material 20 according to the modification described above also achieves the same working effects as in the embodiment.

A power storage device packaging material according to an aspect of the present disclosure is as described in the following [1] to [12], and has been described in detail based on the embodiment and the modification.
[1] A power storage device packaging material including a substrate layer, a barrier layer, a thermal adhesive resin layer or an adhesive layer, and a sealant layer that are laminated in this order, in which in a case where (I) represents the sealant layer or the thermal adhesive resin layer and the sealant layer and (II) represents the substrate layer, a loop stiffness value of the layer or layers (I) is 10 mN or more and 80 mN or less, a loop stiffness value of the layer (II) is 2 mN or more and 20 mN or less, a ratio (I/II) between the loop stiffness value of the layer or layers (I) and the loop stiffness value of the layer (II) is 1.0 or more and 15 or less, and a ratio (I/II) between a thickness of the layer or layers (I) and a thickness of the layer (II) is 1.0 or more and 8.0 or less.
[2] The power storage device packaging material according to [1], in which the thickness of the layer or layers (I) is 30 µm or more and 120 µm or less, and the thickness of the layer (II) is 10 µm or more and 60 µm or less.
[3] The power storage device packaging material according to [1] or [2], in which the ratio (I/II) between the loop stiffness value of the layer or layers (I) and the loop stiffness value of the layer (II) is 2.5 or more and 11.0 or less.
[4] The power storage device packaging material according to any of [1] to [3], in which the ratio (I/II) between the loop stiffness value of the layer or layers (I) and the loop stiffness value of the layer (II) is 3.5 or more and 10 or less.
[5] The power storage device packaging material according to any of [1] to [4], in which the ratio (I/II) between the loop stiffness value of the layer or layers (I) and the loop stiffness value of the layer (II) is 8.0 or more and 9.0 or less.
[6] The power storage device packaging material according to any of [1] to [5], in which the sealant layer contains a polypropylene resin that is a base resin, and the polypropylene resin is composed of homopropylene or block polypropylene.
[7] The power storage device packaging material according to [6], in which the sealant layer further contains an additive resin containing a polyethylene resin, or a block copolymer compatible with the polypropylene resin.
[8] The power storage device packaging material according to [7], in which a content of the additive resin or the block copolymer in the sealant layer is 10 mass% or more and 20 mass% or less.
[9] The power storage device packaging material according to [6], in which the sealant layer further contains an additive resin containing a polyethylene resin, and a compatibilizer having a portion compatible with the polypropylene resin and a portion compatible with the polyethylene resin.
[10] The power storage device packaging material according to [9], in which a total content of the additive resin and the compatibilizer in the sealant layer is 10 mass% or more and 20 mass% or less.
[11] The power storage device packaging material according to [9] or [10], in which the compatibilizer contains a block copolymer of polypropylene and polyethylene, or a block copolymer of polyethylene and polyethylene butylene.
[12] The power storage device packaging material according to any of [1] to [11], in which the power storage device packaging material is an all-solid-state battery packaging material.

However, the aspect of the present disclosure is not limited to the embodiment, the modification, or [1] to [12]. The aspect of the present disclosure can be further modified without departing from the spirit of the present disclosure. For example, in the embodiment and the modification, the anticorrosion treatment layers are provided on the respective surfaces of the barrier layer; however, the aspect of the present disclosure is not limited thereto. The packaging material may include only one anticorrosion treatment layer, or include no anticorrosion treatment layer.

The power storage device packaging material according to the present disclosure can be used, for example, as a packaging material for power storage devices including secondary batteries such as lithium-ion batteries, nickel-metal hydride batteries, and lead batteries, and electrochemical capacitors such as electric double layer capacitors; however, the power storage device packaging material according to the present disclosure can be particularly preferably used as a packaging material for a power storage device composed of an all-solid-state battery. In the power storage device packaging material, the ratio between the loop stiffness value of the sealant layer or the thermal adhesive resin layer and the sealant layer and the loop stiffness value of the substrate layer is adjusted. Thus, when the power storage device packaging material is used as a packaging material for an all-solid-state battery including a power storage element and pressure is applied to the power storage element via the packaging material, the packaging material is less likely to be deformed by heat and pressure, and non-uniform application of the pressure to the surface of the power storage element is prevented and the pressure is uniformly applied to the surface of the power storage element. This enables efficient operation of the all-solid-state battery.

### [Examples]

In the following, the present disclosure will be more specifically described by way of examples. However, the present disclosure is not limited to the following examples.

### [Materials used]

The following materials were used as a barrier layer, a thermal adhesive resin layer, a first adhesive layer, a second adhesive layer, a first anticorrosion treatment layer forming material, and a second anticorrosion treatment layer forming material.

### <Barrier layer (thickness: 40 µm)>

Annealed and degreased soft aluminum foil ("8079" manufactured by Toyo Aluminium K.K.)

### <Thermal adhesive resin layer forming resin composition for forming thermal adhesive resin layer>

Thermal adhesive resin layer forming resin composition obtained by dry blending maleic anhydride-modified homopolypropylene and polyethylene elastomer

### <First adhesive for forming first adhesive layer (mass per unit area: 4.0 g/m²)>

Adhesive (first adhesive) obtained by mixing polyester polyol (manufactured by Showa Denko Materials Co., Ltd., trade name: Tesrac 2505-63, hydroxyl value: 7 to 11 mgKOH/g) with an isocyanurate of isophorone diisocyanate (manufactured by Mitsui Chemicals, Inc., trade name: TAKENATE 600) at NCO/OH ratio of 20.0, followed by dilution to solid content of 26 mass% with ethyl acetate

### <Second adhesive for forming second adhesive layer (mass per unit area: 3.0 g/m²)>

Adhesive (second adhesive) obtained by mixing 10 parts by mass (solid content ratio) of a polyisocyanate compound having an isocyanurate structure with 100 parts by mass of acid-modified polyolefin resin dissolved in toluene

### <First anticorrosion treatment layer forming material and second anticorrosion treatment layer forming material>

The following materials (CL-1) and (CL-2) were used as a first anticorrosion treatment layer forming material (substrate layer side) and a second anticorrosion treatment layer forming material (sealant layer side).
(CL-1): Sodium polyphosphate-stabilized cerium oxide sol at solid content concentration adjusted to 10 mass% using distilled water as solvent
(CL-2): Composition at solid content concentration adjusted to 5 mass% using distilled water as solvent

The sodium polyphosphate-stabilized cerium oxide sol was obtained by mixing 10 parts by mass of Na salt of phosphoric acid with 100 parts by mass of cerium oxide. In the composition, the mass ratio between "polyallylamine (manufactured by Nitto Boseki Co., Ltd.)" and "polyglycerol polyglycidyl ether (manufactured by Nagase Chemtex Corporation)" was 90:10.

### <Sealant layer>

The base resin, additive resin and compatibilizer used for the sealant layer are shown in Table 1. In Table 1, "PP" represents "polypropylene", and "PE" represents "polyethylene".

**[Table 1]**

| | | Type | Material |
|---|---|---|---|
| | Base resin | A1 | Homo PP |
| | | A2 | Random PP |
| | | A3 | Block PP |
| Sealant layer | Additive resin | B1 | PE-butene copolymer |
| | | B2 | PE-octene copolymer |
| | Compatibilizer | C1 | PE·PP-block copolymer |
| | | C2 | PE·PE-butylene block copolymer |

The following material (D1) or (D2) was used as a substrate layer.
(D1): Polyethylene terephthalate film with corona-treated surface
(D2): Nylon film

### [Preparation of packaging material]

### (Example 1)

First, first and second anticorrosion treatment layers were formed on a barrier layer. Specifically, the material (CL-1) was applied to both surfaces of the barrier layer by micro gravure coating so that the dry coating weight of the material (CL-1) was 70 mg/m², followed by baking at 200°C in a drying unit. Then, the material (CL-2) was applied onto the obtained layer by micro gravure coating so that the dry coating weight of the material (CL-2) was 20 mg/m², thereby forming composite layers composed of the materials (CL-1) and (CL-2) as the first and second anticorrosion treatment layers. The two materials (CL-1) and (CL-2) were combined to form the composite layers having anticorrosion properties.

Next, the surface on the first anticorrosion treatment layer side of the barrier layer provided with the first anticorrosion treatment layer and the second anticorrosion treatment layer was bonded to the substrate layer by dry lamination using the first adhesive for forming a first adhesive layer, thereby obtaining a first laminate (substrate layer, first adhesive layer, first anticorrosion treatment layer, barrier layer, second anticorrosion treatment layer). Specifically, the first adhesive was applied onto the surface of the barrier layer on the first anticorrosion treatment layer side so that the thickness of the first adhesive after curing was 4 µm, and dried at 80°C for 1 minute, followed by lamination with the substrate layer and aging at 80°C for 120 hours, thereby obtaining the first laminate. At that time, the substrate layer shown in Table 2 was used as a substrate layer.

Then, the first laminate was placed in an unwinding unit of an extrusion laminator. A thermal adhesive resin layer and a sealant layer were laminated in this order on the second anticorrosion treatment layer of the first laminate by coextrusion from a T-die under processing conditions of 270°C and 80 m/min, thereby obtaining a packaging material (a laminate of the substrate layer, the first adhesive layer, the first anticorrosion treatment layer, the barrier layer, the second anticorrosion treatment layer, the thermal adhesive resin layer, and the sealant layer). In this case, the thermal adhesive resin layer and the sealant layer had thicknesses of 25 µm and 55 µm, respectively. At that time, the sealant layer was formed using a sealant layer forming resin composition. The resin composition was prepared in advance by dry blending the base resin, additive resin, and compatibilizer shown in Table 2 so that the contents of these materials were as shown in Table 2. Furthermore, a thermal adhesive resin layer forming resin composition was prepared and used for the thermal adhesive resin layer.

### (Examples 2 to 8)

A packaging material was prepared in the same manner as in Example 1 except that the composition of the sealant layer was as shown in Table 2.

### (Example 9)

A packaging material was prepared in the same manner as in Example 1 except that the thickness of the substrate layer was changed to 35 µm.

### (Example 10)

A first laminate (substrate layer, first adhesive layer, first anticorrosion treatment layer, barrier layer, second anticorrosion treatment layer) was obtained in the same manner as in Example 1. Furthermore, a sealant layer was formed under the same processing conditions as in Example 1. Next, the sealant layer shown in Table 2 was bonded onto the second anticorrosion treatment layer of the first laminate by dry lamination using the second adhesive for forming a second adhesive layer. At that time, to laminate the first laminate with the sealant layer, the second adhesive was applied onto the second anticorrosion treatment layer so that the thickness of the second adhesive after drying was 3 µm, and dried at 80°C for 1 minute, followed by lamination with the sealant layer and aging at 120°C for 3 hours. Thus, a packaging material (a laminate of the substrate layer, the first adhesive layer, the first anticorrosion treatment layer, the barrier layer, the second anticorrosion treatment layer, the second adhesive layer, and the sealant layer) was prepared.

### (Comparative Example 1)

A packaging material was prepared in the same manner as in Example 1 except that the material of the substrate layer and the composition of the sealant layer were as shown in Table 2.

### (Comparative Example 2)

A packaging material was prepared by dry lamination in the same manner as in Example 10 except that the material of the substrate layer was as shown in Table 2.

### (Comparative Example 3)

A packaging material was prepared in the same manner as in Example 9 except that the composition of the sealant layer was as shown in Table 2.

### (Comparative Example 4)

A packaging material was prepared in the same manner as in Example 1 except that the thicknesses of the thermal adhesive resin layer and the sealant layer were changed to 5 µm and 15 µm, respectively.

### <Loop stiffness value>

The loop stiffness value was measured using a loop stiffness tester DA-S manufactured by Toyo Seiki Seisaku-sho, Ltd. Specifically, the loop stiffness value was measured as follows. First, a test film with a size of 15 mm in the width direction (TD direction) and 200 mm in the flow direction (MD direction) was prepared. Next, both ends of the test film were fixed by a chuck to form a loop with a length of 85 mm. The loop was compressed by an indenter under conditions of a compression speed of 3.3 mm/min, a compression time of 3 seconds, and a compression distance of 20 mm, and the load of the indenter at that time was measured. The maximum value of the load measured in the test was adopted as a loop stiffness value. The compression distance indicates the distance between the indenter and the chuck when the indenter and the chuck were closest to each other. Table 2 shows the measurement results of the loop stiffness value of the thermal adhesive resin layer and the sealant layer in Examples 1 to 9 and Comparative Examples 1, 3, and 4, the measurement results of the loop stiffness value of the sealant layer in Example 10 and Comparative Example 2, and the measurement results of the loop stiffness value of the substrate layer in Examples 1 to 10 and Comparative Examples 1 to 4.

### <Deformation rate of packaging material>

The packaging material obtained in each of Examples 1 to 10 and Comparative Examples 1 to 4 was evaluated for deformation rate. Specifically, first, the packaging material was placed on a SUS plate. At that time, the packaging material was placed so that the sealant layer was in contact with the SUS plate. Next, a SUS block having a bottom surface (short side: 10 mm, long side: 40 mm) was placed on the packaging material. At that time, the SUS block was placed so that the substrate layer was in contact with the bottom surface of the SUS block. Each of the SUS plate and the SUS block was heatable by a heater. Next, a pressure of 5 MPa was applied from the SUS block to the packaging material for 1 hour in the direction in which the SUS plate, the packaging material, and the SUS block were laminated, while each of the SUS plate and the SUS block was maintained at 100°C. Then, the packaging material after application of pressure was cured using an epoxy resin, and a cross section of the packaging material was exposed by a grinder, followed by observation of the cross section of the packaging material using a microscope. The thickness (X) of a portion at which the largest thickness change occurred was measured in the thermal adhesive resin layer and the sealant layer of the packaging material of Examples 1 to 9 and Comparative Examples 1, 3, and 4 and in the sealant layer of the packaging material of Example 10 and Comparative Example 2. The deformation rate ((X-Y)/Y × 100) was calculated from the thickness (Y) of the thermal adhesive resin layer and the sealant layer of the packaging material of Examples 1 to 9 and Comparative Examples 1, 3, and 4 and of the sealant layer of the packaging material of Example 10 and Comparative Example 2, before heating and application of pressure. The deformation rate was evaluated based on the following evaluation criteria. The evaluation results are shown in Table 2.

### [Evaluation criteria]

A: Deformation rate was less than 5%
B: Deformation rate was 5% or more and less than 10%
C: Deformation rate was 10% or more and less than 15%
D: Deformation rate was 15% or more

**[Table 2]**

| | I | | | | | | | | | | II | | | Evaluation results | | |
|---|---|---|---|---|---|---|---|---|---|---|---|---|---|---|---|---|
| | Sealant layer | | | | | | | Ther mal adhe sive resi n laye r | The rma l adh esiv e resi n laye r and seal ant laye r | Se ala nt lay er | Substrate layer | | | | | |
| | Base resin | | Additive resin | | Compati bilizer | | Thic knes s (µm ) | Thic knes s (µm ) | Loop stiffness value (mN/15 mm) | | Mat eria 1 | Thic knes s (µm ) | Lo op stif fne ss val ue (m N/1 5 mm ) | Lo op stif fne ss val ue rati o (I/I I) | Thic knes s ratio (I/II ) | Eval uatio n |
| | T y pe | Co nte nt (ma ss% ) | T y pe | Co nte nt (ma ss% ) | T Y pe | Co nte nt (ma ss% ) | | | | | | | | | | |
| Ex . 1 | A 1 | 100 | - | - | - | - | 55 | 25 | 50. 0 | - | D1 | 25 | 4.5 | 11. 1 | 3.2 | C |
| Ex . 2 | A 2 | 100 | - | - | - | - | 55 | 25 | 10. 4 | - | D1 | 25 | 4.5 | 2.3 | 3.2 | C |
| Ex . 3 | A 1 | 80 | B 1 | 10 | C 1 | 10 | 55 | 25 | 38. 2 | - | D1 | 25 | 4.5 | 8.5 | 3.2 | A |
| Ex . 4 | A 1 | 80 | B 2 | 10 | C 1 | 10 | 55 | 25 | 39. 0 | - | D1 | 25 | 4.5 | 8.7 | 3.2 | A |
| Ex . 5 | A 1 | 80 | B 1 | 10 | C 2 | 10 | 55 | 25 | 37. 6 | - | D1 | 25 | 4.5 | 8.4 | 3.2 | A |
| Ex . 6 | A 3 | 80 | B 1 | 10 | C 1 | 10 | 55 | 25 | 36. 1 | - | D1 | 25 | 4.5 | 8.0 | 3.2 | A |
| Ex . 7 | A 1 | 80 | - | - | C 1 | 20 | 55 | 25 | 45. 7 | - | D1 | 25 | 4.5 | 10. 2 | 3.2 | B |
| Ex . 8 | A 1 | 80 | B 1 | 20 | - | - | 55 | 25 | 32. 1 | - | D1 | 25 | 4.5 | 7.1 | 3.2 | B |
| Ex . 9 | A 1 | 100 | - | - | - | - | 55 | 25 | 50. 0 | - | D1 | 35 | 14. 5 | 3.4 | 2.3 | B |
| Ex . 10 | A 1 | 80 | B 1 | 10 | C 1 | 10 | 80 | - | - | 36. 6 | D1 | 25 | 4.5 | 8.1 | 3.2 | A |
| Co m | A 1 | 80 | B 1 | 10 | C 1 | 10 | 55 | 25 | 38. 2 | - | D2 | 25 | 2.4 | 15. 9 | 3.2 | D |
| p. Ex . 1 | | | | | | | | | | | | | | | | |
| Co m p. Ex . 2 | A 1 | 80 | B 1 | 10 | C 1 | 10 | 80 | - | - | 36. 6 | D2 | 25 | 2.4 | 15. 3 | 3.2 | D |
| Co m p. Ex . 3 | A 2 | 100 | - | - | - | - | 55 | 25 | 10. 4 | - | D1 | 35 | 14. 5 | 0.7 | 2.3 | D |
| Co m p. Ex . 4 | A 1 | 100 | - | - | - | - | 15 | 5 | 17. 5 | - | D1 | 25 | 4.5 | 3.9 | 0.8 | D |

### [Reference Signs List]

10, 20, 100 ... Packaging material (power storage device packaging material)
11 ... Substrate layer
12a ... First adhesive layer
12b ... Second adhesive layer (adhesive layer)
13 ... Barrier layer
14a ... First anticorrosion treatment layer
14b ... Second anticorrosion treatment layer
15, 115 ... Thermal adhesive resin layer
16, 116 ... Sealant layer
50 ... All-solid-state battery (power storage device)
52 ... Power storage element
54 ... Packaging bag
54a ... Bag body
54b ... Seal portion

## Claims

1. A power storage device packaging material comprising
a substrate layer, a barrier layer, a thermal adhesive resin layer or an adhesive layer, and a sealant layer that are laminated in this order, wherein
in a case where (I) represents the sealant layer or the thermal adhesive resin layer and the sealant layer and (II) represents the substrate layer,
a loop stiffness value of the layer or layers (I) is 10 mN or more and 80 mN or less,
a loop stiffness value of the layer (II) is 2 mN or more and 20 mN or less,
a ratio (I/II) between the loop stiffness value of the layer or layers (I) and the loop stiffness value of the layer (II) is 1.0 or more and 15 or less, and
a ratio (I/II) between a thickness of the layer or layers (I) and a thickness of the layer (II) is 1.0 or more and 8.0 or less.

2. The power storage device packaging material according to claim 1, wherein
the thickness of the layer or layers (I) is 30 µm or more and 120 µm or less, and
the thickness of the layer (II) is 10 µm or more and 60 µm or less.

3. The power storage device packaging material according to claim 1, wherein
the ratio (I/II) between the loop stiffness value of the layer or layers (I) and the loop stiffness value of the layer (II) is 2.5 or more and 11.0 or less.

4. The power storage device packaging material according to claim 1, wherein
the ratio (I/II) between the loop stiffness value of the layer or layers (I) and the loop stiffness value of the layer (II) is 3.5 or more and 10 or less.

5. The power storage device packaging material according to claim 1, wherein
the ratio (I/II) between the loop stiffness value of the layer or layers (I) and the loop stiffness value of the layer (II) is 8.0 or more and 9.0 or less.

6. The power storage device packaging material according to claim 1, wherein
the sealant layer contains a polypropylene resin that is a base resin, and
the polypropylene resin is composed of homopropylene or block polypropylene.

7. The power storage device packaging material according to claim 6, wherein
the sealant layer further contains an additive resin containing a polyethylene resin, or a block copolymer compatible with the polypropylene resin.

8. The power storage device packaging material according to claim 7, wherein
a content of the additive resin or the block copolymer in the sealant layer is 10 mass% or more and 20 mass% or less.

9. The power storage device packaging material according to claim 6, wherein
the sealant layer further contains an additive resin containing a polyethylene resin, and a compatibilizer having a portion compatible with the polypropylene resin and a portion compatible with the polyethylene resin.

10. The power storage device packaging material according to claim 9, wherein
a total content of the additive resin and the compatibilizer in the sealant layer is 10 mass% or more and 20 mass% or less.

11. The power storage device packaging material according to claim 9, wherein
the compatibilizer contains a block copolymer of polypropylene and polyethylene, or a block copolymer of polyethylene and polyethylene butylene.

12. The power storage device packaging material according to any one of claims 1 to 11, wherein
the power storage device packaging material is an all-solid-state battery packaging material.
